# EUROPÄISCHE PATENTSCHRIFT

(11) **EP 0 527 358 B1**
(45) Veröffentlichungstag und Bekanntmachung des Hinweises auf die Patenterteilung: **09.08.1995**
(21) Anmeldenummer: 92112356.8
(22) Anmeldetag: 20.07.1992
(51) Int. Cl.: A01G 3/02

(54) **Gartenschere mit einem Schneidblatt und einem hiermit zusammenwirkenden Amboss**
Garden shears with a cutting blade and an anvil cooperating with the blade
Cisailles de jardinage avec une lame de coupe et une enclume coopérant avec celle-ci

(30) Priorität: 23.07.1991 DE 9109071 U
(43) Veröffentlichungstag der Anmeldung: 17.02.1993
(73) Patentinhaber: WOLF-Geräte GmbH Vertriebsgesellschaft KG, D-57518 Betzdorf (DE)
(72) Erfinder: Orthey, Gebhard, W-5241 Nauroth (DE)
(74) Vertreter: Koch, Günther, Dipl.-Ing.

(56) Entgegenhaltungen:
- US-A- 2 207 994
- US-A- 2 528 815
- US-A- 3 372 478

## Beschreibung

Die Erfindung bezieht sich auf eine Gartenschere der im Oberbegriff des Patentanspruchs 1 angegebenen Gattung. Durch die gegenseitige Winkeleinstellung von Amboß und Schneidkante kann auch nach Abnutzung eine Nachstellung in dem Sinne erfolgen, daß über die gesamte Länge der Schneide ein einwandfreier und durchgehender Schnitt vorgenommen werden kann, weil die Schneide den Amboß in Schließstellung längs einer Geraden berührt, d.h. Schneide und Amboß parallel zueinander verlaufen.

Derartige Gartenscheren mit Einstellvorrichtung sind aus der US-A-3 372 478 und der GB-A-1 096 100 bekannt. Hierbei ist der Amboß mit einer gekrümmten Auflagefläche ausgestattet, die auf einer entsprechend gekrümmten Auflagefläche des den Amboß tragenden Scherenschenkels reitet. Eine auch in Schneidrichtung kraftschlüssige Fixierung erfolgt durch eine Schraubbefestigung. Diese Kraftschlußverbindung ist jedoch nicht zuverlässig und bei Beanspruchung kann eine ungewollte Verstellung erfolgen.

Diese ungewollte Verstellung wird bei einer Gartenschere gemäß der US-A-2 528 815 dadurch vermieden, daß der Amboß in einer Kulissenführung verschiebbar und gegen Stiftanschläge abstützbar ist. Diese Stiftanschläge müssen exakt auf den Kulissenführungsschlitz des Amboß und die Feststellschraube ausgerichtet sein, weil sonst ein Verklemmen des Amboß zu befürchten ist, wenn die Toleranz zu klein ist, während bei zu großer Toleranz der Amboß lediglich kraftschlüssig fixiert ist und um die Feststellschraube schwenken kann.

Der Erfindung liegt die Aufgabe zugrunde, eine einfach aufgebaute Einstelleinrichtung für eine Gartenschere zu schaffen, bei der der eingestellte Schneidwinkel auch bei hoher Beanspruchung sicher aufrechterhalten bleibt und bei jeder Einstellung eine sichere Formschlußabstützung gewährleistet ist.

Gelöst wird die gestellte Aufgabe durch die im Kennzeichnungsteil des Patentanspruchs 1 angegebenen Merkmale.

Hierdurch ist nach Lösen der Klemmschrauben eine feinfühlige Verschiebung in den Kulissenschlitzen möglich, so daß in jeder gewünschten Stellung eine Verspannung und damit formschlüssige Abstützung erfolgen kann. Durch Verschieben innerhalb der Langlöcher läßt sich beispielsweise eine Einstellung um einen Winkel von ca. 1° in beiden Richtungen bewirken.

Sobald die gewünschte Lage fixiert ist, was beispielsweise durch Schließen der Schere gewährleistet werden kann, werden die auf der Amboßschraube befindlichen Schrauben zweckmäßigerweise mit einem Innensechskantschlüssel festgeschraubt. Da die Hülsen verdrehungssicher in den Schlitzen laufen, kann mit einem einzigen Schlüssel die Einstellung vorgenommen werden.

Nachstehend wird ein Ausführungsbeispiel der Erfindung anhand der Zeichnung beschrieben. In der Zeichnung zeigen:
Fig. 1 eine schematische Ansicht einer Schere mit verstellbarem Amboß;
Fig. 2 einen Schnitt nach der Linie A-B gemäß Fig. 1;
Fig. 3 eine Darstellung des Amboß in der einen Winkelendstellung (im Gegenuhrzeigersinn aus der Nullage verschwenkt);
Fig. 4 eine Darstellung des Amboß in der anderen Winkelendstellung (im Uhrzeigersinn aus der Nullage verschwenkt).

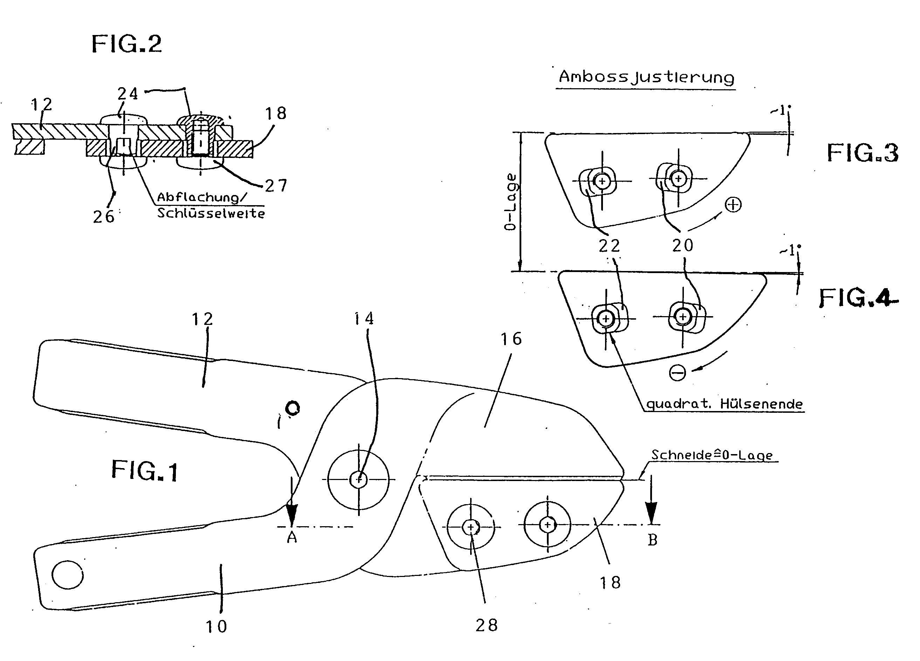

Die in der Zeichnung dargestellte einfache Schere besteht aus zwei Scherenschenkeln 10 und 12, die durch einen Bolzen 14 schwenkbar miteinander verbunden sind. Der Scherenschenkel 10 trägt fest eine Schneide 16, während der Scherenschenkel 12 einstellbar einen Amboß 18 trägt. Der Amboß weist zwei Langlöcher 20 und 22 auf, die gegenüber der Schneidkante in einem spitzen Winkel mit entgegengesetzter Neigung angestellt sind. In den Scherenschenkel 12 sind zwei Löcher eingebohrt, in die Amboßhülsen 24 eingesetzt sind. Diese weisen einen Vierkantkopf 26 auf, dessen Schlüsselbreite der Breite der Langlöcher 20 und 22 entspricht und der in diesen Langlöchern zu liegen kommt. Gesichert werden die Amboßhülsen durch Schrauben 27, die in die Hülsen 24 einschraubbar sind und im Kopf einen Innensechskant 28 aufweisen, so daß auf einfache Weise nach Lösen der Schrauben 27 eine Verstellung zwischen den beiden in Fig. 3 und 4 dargestellten Endwinkelstellungen vorgenommen werden kann.

Gemäß dem dargestellten Ausführungsbeispiel sind die Langlöcher 20, 22 im Amboß vorgesehen, es ist jedoch auch möglich, diese Langlöcher im Scherenschenkel anzubringen und die Amboßhülsen in Löchern des Amboß 18 einzustecken. Anstelle der Verstellbarkeit des Amboß könnte bei festem Amboß das Schneidblatt 16 in der gleichen Weise verstellbar angeordnet werden. Es ist auch möglich, Schneide und Amboß verstellbar zu gestalten.

Die in Fig. 1 dargestellte Schere stellt lediglich ein Ausführungsbeispiel dar und es kann das Prinzip der Verstellung auch bei allen anderen vergleichbaren Scheren angewandt werden, gleichgültig mit welcher Hebelanordnung diese ausgerüstet sind.

## Patentansprüche

1. Gartenschere mit einem Schneidblatt (16) an dem einen Scherenschenkel (10) und mit einem Amboß (18) an dem anderen Scherenschenkel, wobei der Amboß (18) oder/und das Schneidblatt (16) bezüglich ihrer Schneidkante dadurch einstellbar sind, daß zwischen Amboß (18) oder/und Schneidblatt und Scherenschenkel (12) eine in jeder Stellung formschlüssig in Schneidrichtung wirkende Kulissen-Einstellvorrichtung (20, 22, 24, 26) vorgesehen ist, welche den Amboß oder das Schneidblatt gegenüber dem Schenkel auf einem Bogen derart führt, daß die Schneidkante aus einer Nullstellung heraus in beiden Richtungen verstellbar ist,
dadurch gekennzeichnet, daß die Kulissen-Einstellvorrichtung aus zwei Langlöchern (20, 22) besteht, die gegenüber der Schneidkante in entgegengesetzter Neigung angestellt sind und die von Amboßhülsen (24) durchsetzt sind, in die Schrauben (27) unter Festklemmung des Amboß (18) oder des Schneidblattes einschraubbar sind.

2. Gartenschere nach Anspruch 1,
dadurch gekennzeichnet, daß die Amboßhülsen einen Vierkantkopf (26) aufweisen, dessen Schlüsselbreite der Breite der Langlöcher (20, 22) entspricht.

3. Gartenschere nach Anspruch 1,
dadurch gekennzeichnet, daß der Kopf der Schrauben (27) einen Innensechskant (28) aufweist.

## Claims

1. Pruner with a blade (16) on one pruner leg (10) and with an anvil (18) on the other pruner leg, the anvil (18) and/or the blade (16) being adjustable in terms of their cutting edge by virtue of the fact that between the anvil (18) or/and the blade and the pruner leg (12) there is provided a gate-type adjustment mechanism (20, 22, 24, 26) which in every position acts in a positive manner in the direction of cutting, and which guides the anvil or the blade in relation to the leg along an arc in such a manner that the cutting edge can be adjusted in both directions from a neutral position,
characterised in that the gate-type adjustment mechanism consists of two slots (20, 22) which are set with opposed inclination in relation to the cutting edge and through which pass anvil sleeves (24) into which can be screwed screws (27) so as to firmly clamp the anvil (18) or the blade.

2. Pruner according to claim 1,
characterised in that the anvil sleeves incorporate a square head (26), the width of whose key matches the width of the slots (20, 22).

3. Pruner according to claim 1,
characterised in that the head of the screws (27) incorporates a hexagon socket (28).

## Revendications

1. Sécateur comprenant une lame de coupe (16) sur l'une des branches (10) du sécateur et une enclume (18) sur l'autre branche du sécateur, sachant que l'enclume (18) et/ou la lame de coupe (16) sont réglables au niveau de leur tranchant par le fait qu'entre l'enclume (18) et/ou la lame de coupe et la branche (12) du sécateur est prévu un dispositif de réglage à coulisse (20,22,24,26) agissant avec un engagement positif dans le sens de coupe quelle que soit la position, qui guide l'enclume ou la lame de coupe sur un arc de cercle par rapport a la branche, de manière à ce que le tranchant puisse être réglé dans les deux sens à partir d'une position zéro, caractérisé en ce que le dispositif de réglage à coulisse est composé de deux trous oblongs (20,22) qui sont chacun inclinés en sens inverse par rapport au tranchant et qui sont traversés par des douilles d'enclume (24) dans lesquelles peuvent être vissées des vis (27) qui maintiennent l'enclume (18) ou la lame de coupe.

2. Sécateur selon la revendication 1, caractérisé en ce que les douilles de l'enclume présentent une tête carrée (26) dont la largeur correspond à la largeur des trous oblongs (20,22).

3. Sécateur selon la revendication 1, caractérisé en ce que la tête des vis (27) présente un six pans creux (28).
